# EUROPEAN PATENT APPLICATION

(11) **EP 4 644 959 A1**
(43) Date of publication of application: **05.11.2025**
(21) Application number: 25170498.7
(22) Date of filing: 14.04.2025
(51) Int. Cl.: G02B 6/38, G02B 21/00

(54) **OPTICAL FIBER ENDFACE INSPECTION MICROSCOPE NATIVELY ADAPTED FOR ANGLED POLISHED CONNECTORS**

(30) Priority: 30.04.2024 US 202463640447 P
(71) Applicant: EXFO Inc., Québec, QC G1M 2K2 (CA)
(72) Inventor: FILION, Jean, Québec, G1M 2K2 (CA); LABERGE, Raphael, Québec, G1M 2K2 (CA); COTE, Olivier, Québec, G1M 2K2 (CA); L'HEUREUX, Mario, Québec, G1M 2K2 (CA)
(74) Representative: Gregory, Alexandra Louise

(57) **Abstract**

There is provided an optical-fiber connector endface inspection microscope device that is natively designed for inspecting angled-polished (APC) optical-fiber connectors, i.e., without requiring an angled adapter tip or optical components in the adapter tip to deviate light reflected from the optical-fiber endface. Adapter tips are still needed to adapt the microscope device to different types of connectors, but they are small, straight, and low cost. This can be achieved using optics configured to deviate the illumination path so illumination light exits the inspection microscope device along an illumination path that is at an angle that is substantially egal to 8 degrees, so as to illuminate the connector endface in a direction that is substantially normal to the angled-polished endface to be inspected.

## Description

### TECHNICAL FIELD

The present description generally relates to inspection of optical-fiber connector endfaces, and more particularly to optical-fiber connector endface inspection microscopes adapted to inspect angled-polished optical-fiber connectors.

### BACKGROUND

The quality and cleanliness of endfaces of optical-fiber connectors represent important factors for achieving adequate system performance of optical communication networks. Indeed, any contamination of or damage on the mating surface of an optical-fiber connector may severely degrade signal integrity. Optical-fiber inspection microscopes are commonly employed to visually inspect and/or to analyze the optical-fiber endface of an optical-fiber connector at installation or during maintenance of optical communication networks, in order to verify the quality of the optical-fiber connection.

Because of the wide variety of optical-fiber connector types deployed in the telecommunication industry, optical-fiber connector endface inspection microscopes are typically employed with interchangeable adapter tips so as to allow inspection of various types of optical-fiber connectors directly or as inserted in an optical-fiber connector adapter. Optical-fiber connector endface inspection microscopes are therefore typically designed for use with an adapter tip selected among a plurality of adapter tip types.

Optical-fiber connectors now used in the industry can be split angled-polished physical-contact (APC) or non-angled-polished physical-contact (UPC). Conventionally, existing optical-fiber connector endface inspection microscopes are natively designed for inspecting non-angled-polished (UPC) optical-fiber connectors. Angled-polished (APC) optical-fiber connectors may be inspected using special adapter tips designed to support such connectors.

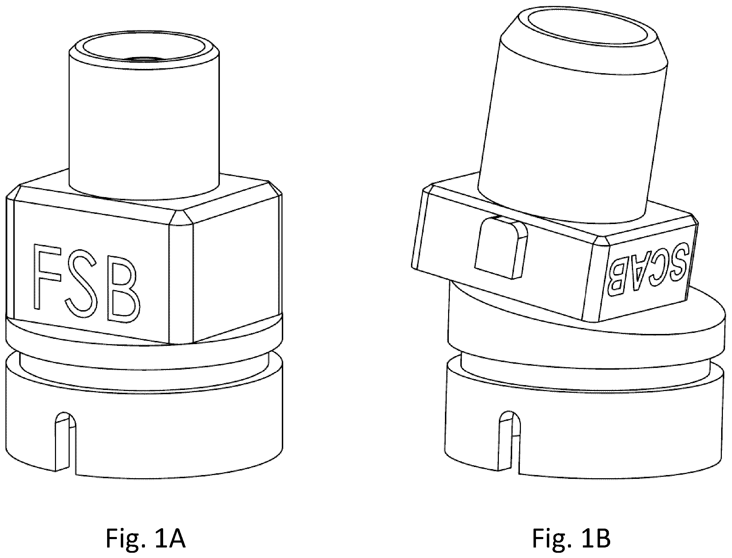

As shown in Fig. 1A, adapter tips designed for inspecting non-angled-polished (UPC) optical-fiber connectors may consist of simple mechanical adapters. They are made straight and typically comprise no optical component. They can thus be manufactured at relatively low cost.

In order to appropriately image the optical-fiber endface, illumination light reflected from the endface should be appropriately collected by the inspection microscope. This typically necessitates that the imaging axis of the inspection microscope system be aligned perpendicularly to the inspected endface. Therefore, as shown in Fig. 1B, adapter tips designed for inspecting angled-polished (APC) optical-fiber connectors are inevitably more complex. An 8-degree angle is manufactured in the adapter tip in order to position the angled-polished (APC) connector so as to align the imaging axis of the inspection microscope system perpendicularly to the inspected endface. The manufacturing process of such adapter tip substantially impact the cost when compared to adapter tips for non-angled-polished connectors (i.e., about three times the cost of a UPC adapter tips).

However, this alignment can become impractical, e.g., when inspecting an angled-polished physical-contact (APC) optical-fiber endface that is deeply recessed within an optical-fiber connector adapter, especially when it is long and narrow, or when the connector is in a densely populated patch panel. Optical elements such as lenses, wedges and/or rhomboid prisms may then be included in the adapter tip in order to allow such inspection.

For example, some fiber inspection adapter tips exist in the art for imaging deeply recessed APC connector enfaces. For example, US Patent 9,880,359 to Morin-Drouin et al. describes a fiber inspection adapter tip using at least one relay lens within the tip. In this case, the inspection microscope may be positioned so its optical axis is parallel to the optical fiber axis of the inspected connector. The lens axis of the relay lens is offset relative to the optical-fiber endface so as to deviate light reflected from the optical-fiber endface, towards the optical axis of the inspection microscope. Also, US Patent 11,644,625 to Filion et al. describes a fiber inspection adapter tip using a rhomboid prism to relay light reflected from the optical-fiber endface to the optical axis of the inspection microscope.

These special adapter tips are even more expensive due to manufacturing complexity and the additional cost of the optical components, and significantly impact the overall cost of the solution, especially if multiple expensive adapter tips are needed to support a variety of optical-fiber connectors deployed in the field.

There therefore remains a need for an optical-fiber connector endface inspection microscope solution that allow inspection of angled-polished (APC) optical-fiber connectors at lower cost.

### SUMMARY

It was found that, nowadays and especially in the broadband access market, most optical-fiber connectors are made angled-polished (APC). There is therefore an increased need for a low-cost solution for inspection of angled-polished (APC) optical-fiber connectors.

There is therefore provided an optical-fiber connector endface inspection microscope device that is natively designed for inspecting angled-polished (APC) optical-fiber connectors, i.e., without requiring an angled adapter tip or optical components in the adapter tip to deviate light reflected from the optical-fiber endface. Adapter tips are still needed to adapt the microscope device to different types of connectors, but they are small, straight, and low cost. This can be achieved using optics configured to deviate the illumination path, so illumination light exits the inspection microscope device at an angle that is substantially egal to 8 degrees, so as to illuminate the connector endface in a direction that is substantially normal to the angled-polished connector endface to be inspected. There are no optical components in the adapter tips. All the optical components are held within the housing of the inspection microscope device.

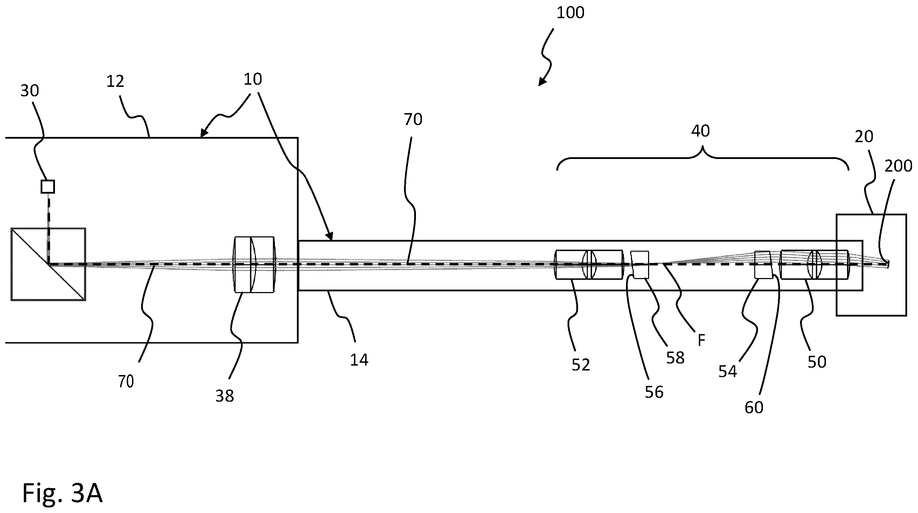

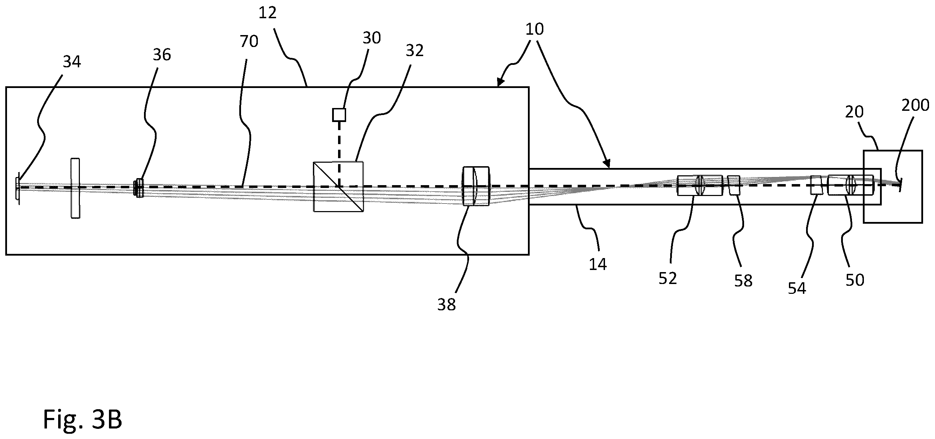

In accordance with one aspect, illumination light exits the microscope device at an angle that is substantially egal to 8 degrees relative to the optical axis of the inspection microscope device. The optical design of the probe (see Figs. 3A and 3B) therefore allows to illuminate the angled-polished (APC) connector enface in a direction that is substantially normal thereto. In accordance with one embodiment, this can be achieved by transversally offsetting a focal point of the optical lenses of the inspection microscope probe relative to the optical axis of the inspection microscope probe.

The proposed APC-native inspection microscope device may have the following benefits:
- The adapter tips to adapt to different kind of connectors can be small, straight, and low cost;
- The adapter tips can be made without any optical component such that all lenses hold within the inspection microscope device; and/or
- The inspection microscope device can be long and straight to allow inspection in dense connector environments.

In some embodiments, the optical axes of all lenses of the inspection microscope device (including the objective lens system and relay lenses) may be aligned. Advantageously, such construction keeps all components optimally compact transversally and may also further contribute to the low cost of the solution.

In accordance with one aspect, there is provided an optical-fiber connector endface inspection microscope device for inspecting an endface of an angled-polished optical-fiber connector, the optical-fiber connector endface inspection microscope device comprising:
an illumination source generating illumination light for illuminating the endface to be inspected, said illumination light propagating along an illumination path;
an image detector for capturing at least one image of the endface to be inspected from light returned from the endface;
an objective lens system comprising at least one objective lens to produce an image of the endface to be inspected on the image detector, the objective lens system defining an optical axis;
relay optics receiving said illumination light for illuminating the connector endface, and configured to deviate said illumination path so as to illuminate the connector endface in a direction that is substantially normal to the angled-polished connector endface to be inspected; and
a housing structure enclosing said illumination source, said image detector, said objective lens system and said relay optics, said housing structure being releasably connectable to an adapter tip for mechanically interfacing with the angled-polished optical-fiber connector so as to position an optical-fiber axis of the angled-polished optical-fiber connector substantially parallel to the optical axis of said objective lens system; and
wherein illumination light exits said housing structure along an illumination path that is at an angle of about 8 degrees relative to the optical axis of said objective lens system, so as to illuminate the connector endface in a direction that is substantially normal to the angled-polished endface to be inspected.

In accordance with another aspect, there is provided an optical-fiber connector endface inspection microscope system for inspecting an endface of an angled-polished optical-fiber connector, the optical-fiber connector endface inspection microscope system comprising:
an optical-fiber connector endface inspection microscope device comprising:
   an illumination source generating illumination light for illuminating the endface to be inspected, said illumination light propagating along an illumination path;
   an image detector for capturing at least one image of the endface to be inspected from light returned from the endface;
   an objective lens system comprising at least one objective lens to produce an image of the endface to be inspected on the image detector;
   relay optics receiving said illumination light for illuminating the connector endface, and configured to deviate said illumination path so as to illuminate the connector endface in a direction that is substantially normal to the angled-polished connector endface to be inspected; and
   a housing structure enclosing said illumination source, said image detector, said objective lens system and said relay optics, said housing structure being releasably connectable to an adapter tip for mechanically interfacing with the angled-polished optical-fiber connector;
   wherein illumination light exits said housing structure along an illumination path that is at an angle of about 8 degrees relative to an optical axis of said objective lens system; and
   wherein said housing structure comprises a main housing and an optical head connectable to the main housing, said relay optics being enclosed in the optical head; and
an adapter tip releasably connectable to the optical head, for mechanically interfacing with the optical-fiber connector to be inspected and configured to position the connector endface on an object plane for inspection such that an optical fiber axis of said optical-fiber connector is substantially parallel to optical axis of said objective lens system and so as to illuminate the connector endface in a direction that is substantially normal to the angled-polished endface to be inspected.

In some aspects, the housing structure includes a main housing and an optical head connectable to the main housing, the optical head is releasably connectable to an adapter tip for mechanically interfacing with the optical-fiber connector to be inspected and defining a position of the connector endface on an object plane for inspection, and said relay optics are enclosed in the optical head.

In some aspects, the adapter tip is interchangeable with other adapter tips to allow inspection of various types of optical-fiber connectors, whereas the optical head remains the same for said multiple types of optical-fiber connectors to be inspected.

In some aspects, said optical head includes a substantially elongated hollow member and a sub-cell assembly in which said relay optics are assembled, said sub-cell assembly being mounted within the elongated hollow member.

In some aspects, said relay optics includes: a first relay lens and a second relay lens along said illumination path and receiving said illumination light from said objective lens system, said first relay lens and said second relay lens deviating said illumination path to an angle of about 8 degrees relative to the optical axis of said objective lens when illumination light exits said relay optics.

In some aspects, said relay optics includes: a first relay lens and a second relay lens along said illumination path and receiving said illumination light from said objective lens system; and a first refracting plane surface and a second refracting plane surface in-between said first relay lens and second relay lens, wherein said first refracting plane surface and said second refracting plane surface are both tilted relative to optical axes of said first relay lens and second relay lens so as to deviate said illumination path at an angle that is substantially egal to 8 degrees relative to the optical axis of said objective lens system when said illumination light exits said relay optics.

In some aspects, optical axes of said objective lens system, said first relay lens and second relay lens are substantially parallel to an optical fiber axis of said angled-polished optical-fiber connector during inspection.

In some aspects, optical axes of said objective lens system and of said first lens and second relay lens are all substantially aligned to a center of the connector endface during inspection.

In some aspects, said relay optics include a first optical wedge and a second optical wedge along said illumination path, wherein a surface of said first optical wedge defines said first refracting plane surface and a surface of said second optical wedge defines said second refracting plane surface.

In some aspects, said relay optics include an optical prism, said optical prism defining said first refracting plane surface and said second refracting plane surface. 11.

In some aspects, said angle of said illumination path at the exit of said housing structure relative to the optical axis of said objective lens is between 6 and 10 degrees.

In some aspects, said angle of said illumination path at the exit of said housing structure relative to the optical axis of said objective lens is between 7 and 9 degrees.

In some aspects, the objective lens system further includes a reflective device between the at least one objective lens and the relay optics to deflect said optical axis, and wherein illumination light exits said housing structure along an illumination path that is at an angle of about 8 degrees relative to the deflected optical axis.

In this specification, unless otherwise mentioned, word modifiers such as "substantially" and "about" which modify a value, condition, relationship or characteristic of a feature or features of an embodiment, should be understood to mean that the value, condition, relationship or characteristic is defined to within tolerances that are acceptable for proper operation of this embodiment in the context its intended application. In particular, the term "about" generally refers to a range of numbers that one skilled in the art would consider equivalent to the stated value (e.g., having the same or an equivalent function or result). In some instances, the term "about" may mean a variation of ±10% of the stated value. It is noted that all numeric values used herein are assumed to be modified by the term "about", and that all conditions, relationships or characteristics used herein are assumed to be modified by the term "substantially", unless stated otherwise. The term "between" is used herein to refer to a range of numbers or values defined by endpoints is intended to include both endpoints, unless stated otherwise.

Further features and advantages of the present invention will become apparent to those of ordinary skill in the art upon reading of the following description, taken in conjunction with the appended drawings.

The following description is provided to gain a comprehensive understanding of the methods, apparatus and/or systems described herein. Various changes, modifications, and equivalents of the methods, apparatuses and/or systems described herein will suggest themselves to those of ordinary skill in the art. Description of well-known functions and structures may be omitted to enhance clarity and conciseness.

Although some features may be described with respect to individual exemplary embodiments, aspects need not be limited thereto such that features from one or more exemplary embodiments may be combinable with other features from one or more exemplary embodiments.

### BRIEF DESCRIPTION OF THE DRAWINGS

Fig. 1A is a perspective view of an adapter tip designed for inspecting non-angled-polished (UPC) optical-fiber connectors, in accordance with one embodiment.
Fig. 1B is a perspective view of an adapter tip designed for inspecting angled-polished (APC) optical-fiber connectors, in accordance with one embodiment.
Fig. 2 is a perspective view of an optical-fiber connector endface inspection microscope system, in accordance with one embodiment.
Fig. 3A is a schematic illustrating the optical components of the connector endface inspection microscope system of Fig. 2, along with light rays along the illumination path, i.e., from the illumination source to the connector endface under inspection, in accordance with one embodiment employing optical wedges.
Fig. 3B is a schematic illustrating the optical components of the connector endface inspection microscope system of Fig. 2, along with light rays that are reflected on the connector endface and that propagate to the image detector along an imaging path, in accordance with the embodiment of Fig. 3A.
Fig. 4 is a schematic illustrating the optical components of the connector endface inspection microscope system of Fig. 2, along with imaging rays from the connector endface to the image detector, in accordance with the embodiment of Fig. 3A.
Fig. 5A is an elevation view of an optical head of the optical-fiber connector endface inspection microscope system of Fig. 2, along with an adapter tip designed for interfacing with Pushlok^{™} connectors, in accordance with one embodiment.
Fig. 5B is an elevation view of an optical head of the optical-fiber connector endface inspection microscope system of Fig. 2, along with an adapter tip designed for interfacing with SC connectors, in accordance with one embodiment.
Fig. 6 is a perspective view of the optical head and adapter tip of Fig. 5B showed as exploded from one another.
Fig. 7 is an exploded perspective view of the optical head of Figs. 5A and 5B showing the optical sub-cell assembly, in accordance with one embodiment.
Fig. 8 is a schematic illustrating the optical components of the connector endface inspection microscope system of Fig. 2, in accordance with another embodiment employing an optical prism.
Fig. 9 is a schematic illustrating the optical components of the connector endface inspection microscope system of Fig. 2, in accordance with another embodiment employing no optical wedge and no optical prism.
Fig. 10 is a schematic illustrating the optical components of an connector endface inspection microscope system, in accordance with another embodiment wherein the optical head is bent.
Fig. 11 is a block diagram illustrating an example architecture of the inspection microscope device of the system of Fig. 2.

### DETAILED DESCRIPTION

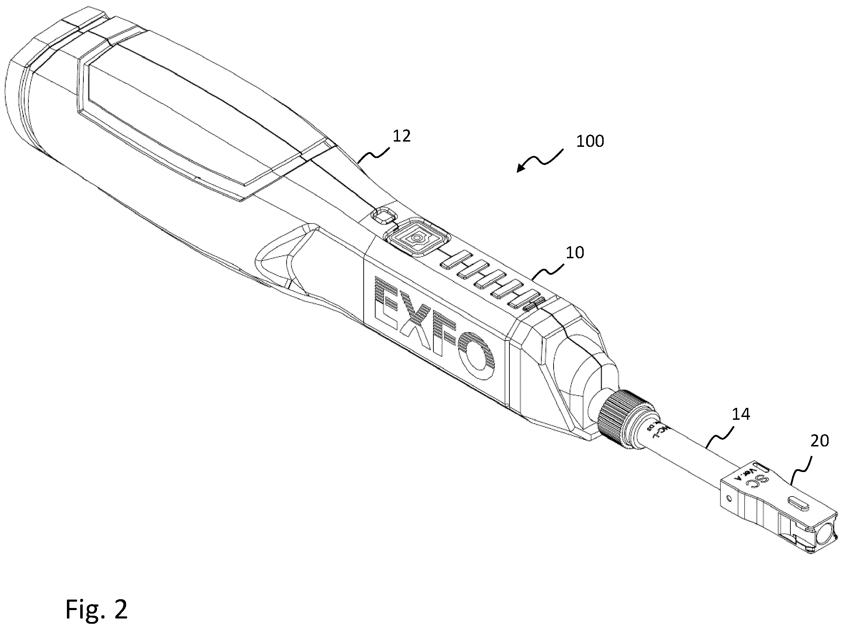

Now referring to the drawings, Fig. 2 illustrates an optical-fiber connector endface inspection microscope system comprising a microscope device 100 and an adapter tip 20 that is releasably connectable to the microscope device 100 for interfacing with the optical-fiber connector to be inspected. The optical-fiber connector endface inspection microscope device 100 has a housing structure 10 comprising a main housing 12 and an optical head 14 connectable to the main housing 12.

Referring to Fig. 3, which comprises Fig. 3A and Fig. 3B, the optical components of the connector endface inspection microscope system of Fig. 2 are described. Fig. 3A illustrates light rays along the illumination path, i.e., from the illumination source 30 to the connector endface 200 under inspection, whereas Fig. 3B illustrates light rays that are reflected on the connector endface 200 and that propagate to the image detector 34 along an imaging path.

It will be understood that the configuration of Fig. 3 illustrates one example embodiment of an optical-fiber connector endface inspection microscope system. It should be appreciated by those of ordinary skill in the art that multiple variations of the inspection microscope can be envisaged by persons skilled in the art and that the embodiment illustrated herein is no way meant to be limitative.

Referring to Fig. 3B generally, an optical-fiber connector endface inspection microscope device 100 comprises an imaging assembly which comprises an illumination source 30 for generating illumination light for illuminating the connector endface 200 to be inspected, an illumination beam splitter 32 to direct illumination light toward the connector endface (may be replaced, e.g., by a partly reflecting mirror, partly reflecting wedge or the like), an image detector 34 (such as a CMOS) for capturing at least one image of the endface to be inspected, and imaging optics. The imaging optics comprises an objective lens system (and optionally other lenses, mirrors and/or other optical components), for imaging the illuminated connector endface on an image plane coinciding with the image detector 34. The object plane as defined herein is determined by the objective lens system and coincides with the plane where the connector endface to be inspected (i.e., the object) should be positioned (within the focusing range of the objective lens system) to be suitably imaged on the image detector 34. More specifically, here, the objective lens system comprises a focusing lens 36 for adjusting a focus of the objective lens system on the image detector 34 and at least one fixed objective lens 38.

The optical path between the object plane and the image plane defines an imaging path of the inspection microscope, along which propagates the inspection light beam resulting from reflection of illumination light on the connector endface (specular and/or diffuse reflection), for optical magnification of the object (i.e., the connector endface) positioned on the object plane.

The illumination source 30, the image detector 34 and the objective lens system (including the focusing lens 36 and the fixed objective lens 38) are enclosed in the main housing 12.

In the embodiment of Fig. 3, the focusing lens 36 is embodied as a deformable focusing lens but in other embodiments, the focus may be adjusted by moving the focusing lens using an actuator. It will be understood that the objective lens system may further comprise other lenses or optical elements as required by the optical design, which lenses and optical elements can be either fixed relative to the microscope system or movable, e.g., held fixed with the focusing lens.

The imaging optics further comprises relay optics 40 receiving illumination light from the objective lens 38 and relaying it to the connector endface for illumination thereof. As described in more detail hereinbelow, the relay optics 40 is configured to direct illumination light so that it is normally incident to the connector endface 200 under inspection.

In the illustrated embodiments, the relay optics 40 is enclosed in an optical head 14 which is made long and thin for easier access to the connector endface to be inspected, even if the connector is recessed in a bulkhead. In the embodiment of Fig. 3, the optical head 14 is made releasably connectable to the main housing 12 but is it noted that, in other embodiments, the main housing 12 and the optical head 14 may be made as a single piece and may therefore not be disconnectable from one another. It is noted that the optical head 14 shall not be confused with the adapter tip 20 in that the optical head 14 remains the same for varied types of optical-fiber connectors to be inspected and does not directly interface with the optical-fiber connector.

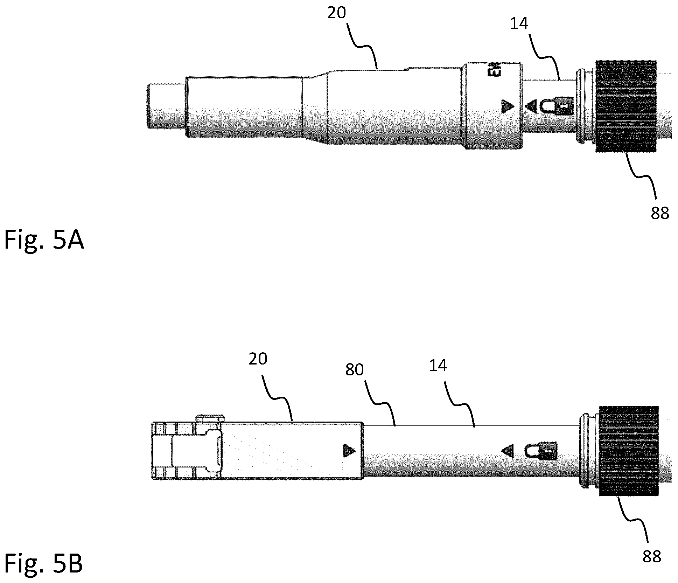

In contrast, the adapter tip 20 is used to mechanically interface with the optical-fiber connector and is interchangeable to change the mechanical interface in order to adapt to various types of optical-fiber connectors (see Figs. 5A and 5B). The adapter tip 20 has a shape that is configured to easily engage with the optical-fiber connector to be inspected (directly or as inserted in a bulkhead) and to position the optical-fiber connector endface on the object plane of the objective lens system. In the embodiment of Fig. 3, the adapter tips 20 are further shaped and configured to position the optical-fiber connector so that an optical fiber axis of said optical-fiber connector is substantially parallel, and optionally coincident, with the optical axis 70 of the objective lens system.

Also, the relay optics 40 are assembled inside the optical head 14 and there are no optical components needed in the adapter tip 20. This allows to not duplicate optical components from one adapter tip to another. In the prior art, when designing adapter tips, the working distance, optical components and general layout often changed from one adapter tip to another. By placing all the optical components in the optical head 14, all parameters of the optical system stay the same. The adapter tip 20 is simply used to adapt the mechanical interface to the specific optic-fiber connector or bulkhead format under inspection, hence reducing the complexity when designing a new adapter tips.

The adapter tip 20 may have a substantially elongated hollow member and the optical head 14 be configured so that, when interconnected, at least part of the optical head interlocks into the hollow member of the adapter tip 20 so that the relay optics 40 of the optical head 14 are positioned within the adapter tip 20. This configuration allows the relay optics 40 to be located close to the connector endface under inspection, i.e., near the inspection end of the optical-fiber inspection microscope device 100.

The optical-fiber connector endface inspection microscope system provides a long reach inspection microscope that is straight and centered on the angled-polished optical-fiber connector endface 200 during inspection. The main difficulties for achieving a linear microscope from the objective lens system to the connector endface under inspection are in the control of the illumination and in image quality. The optical design of Fig. 3 allows to control the illumination path from the illumination source 30 to the connector endface 200 and from the connector endface 200 to the image detector 34 in a way that it reaches the connector endface in a direction that is substantially normal to the angled-polished connector endface, and is reflected to reach the image detector 34 with a good imaging quality.

For an angled-polished connector endface, optimal illumination is obtained when the illumination light beam is substantially normal to the inspected connector endface 200 and substantially or close to be collimated (slightly convergent or slightly divergent). These conditions are obtained by use of the relay optics 40.

To obtain such illumination, relay optics 40 is included in the optical head 14, so as to be positioned as close as possible to the connector endface under inspection. The relay optics 40 comprise a first relay lens 50 and a second relay lens 52 along said illumination path, which first and second relay lenses define a focal point F. It further comprises a first optical wedge 54 defining a first refracting plane surface 56 and a second optical wedge 58 defining a second refracting plane surface 60, both located in-between said first and second relay lenses 50, 52, wherein said first refracting plane surface and said second refracting plane surface are both tilted relative to the optical axis 70 of the objective lens system.

To obtain the collimated beam (or close to collimated), the distance between the two relay lenses 50, 52 corresponds (or is close) to the sum of the focal distance F1 of the first relay lens and the focal distance F2 of the second relay lens (F1 + F2). The focal point F is defined in-between the relay lens 50, 52 at a distance F1 from the first relay lens 50 (and therefore F2 from the second relay lens 52). The illumination source 30 is positioned at a distance F3 from the objective lens 38 which corresponds to its focal distance F3 and illumination light therefore arrives substantially collimated or, as shown herein, slight convergent on the second relay lens 52. This configuration creates a substantially collimated beam or slight convergent shape which maximizes light reflected back into the objective lens system. In is noted that if the beam was substantially divergent, light reflected on the connector endface would also be divergent after the reflection and some of it would not reach the objective lens system. On the other hand, a substantially convergent beam would reduce the illuminated area on the connector endface 200.

In the embodiment of Fig. 3, the focal point F is between the first and second relay lenses 50, 52, but closer to second relay lenses 52. It is however noted that in other embodiment, the focal point F may be defined between the objective lens 38 and the second relay lens 52, thereby creating a converging illumination beam on the inspected connector endface 200.

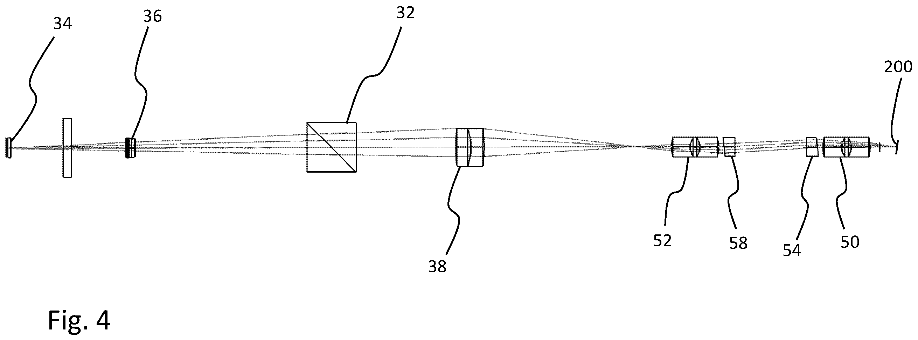

Referring to Fig. 4, having a normally incident and substantially collimated illumination beam creates an imaging path that is substantially coincident with the illumination path so light incident on the connector endface returns substantially on the same path, which minimizes the loss of light.

In order to illuminate the connector endface in a direction that is substantially normal to the angled-polished endface, the collimated beam is tilted at an angle of 8 degrees relative to the optical axis 70 of the objective lens system when exiting said relay optics 40. In the embodiment of Fig. 3, this is achieved by transversally offsetting the illumination path and the focal point F in-between the relay lenses 50, 52 relative to the optical axis 70. If a source point is located at the focal distance of a lens and it is transversally offset from the center of the lens, the resultant collimated beam is tilted. The angle of the tilt is related to the effective focal length (EFL) of the lens and the offset of the source point. Smaller EFL needs less transversal offset to obtain the 8-degree angle.

In the embodiment of Fig. 3, the focal point F of the illumination beam between the two relay lenses 50, 52 is transversally offset using a pair of optical wedges 54, 58 positioned in-between the relay lenses 50, 52. The two optical wedges 54, 58 are separated by an air gap. The offset is created by the refraction at the angled refracting plane surfaces 56, 60 of the wedges 54, 58 and the length of the air gap between the two wedges 54, 58. When light reaches the first refracting plane surfaces 56, an orientation of the illumination path is deviated slightly to create the offset. When reaching the second refracting plane surface 60, a second refraction occurs, and the illumination path is deviated back to its original orientation (before the first wedge 58) but offset. The angle of the refracting plane surfaces and the distance between them define the offset. It is noted that a proper optical design may need to balance the offset and the optical quality because too much tilt of the wedge may impair the optical quality.

In the illustrated case, it is a key requirement that the optical components be transversally compact. The amplitude of the offset is therefore limited by the size of the optical components (or the mechanical part). Irrespective of the optical components used to create the offset, the optical quality of the overall design should be considered in order obtain inspection images of good quality. This is also a limitation for the amplitude of the offset.

Furthermore, in the embodiment of Fig. 3, the optical axes of all lenses of the inspection microscope device (including the objective lens system and relay lenses 50, 52) are not only parallel but are also aligned. Advantageously, such construction keeps all components optimally compact transversally and may also further contribute to ease manufacturing and minimize the manufacturing cost of the solution. Furthermore, the wedges 54, 58 may also be positioned such that their center is aligned with the optical axis of the relay lenses 50, 52, which further contributes to ease manufacturing and minimize the manufacturing cost.

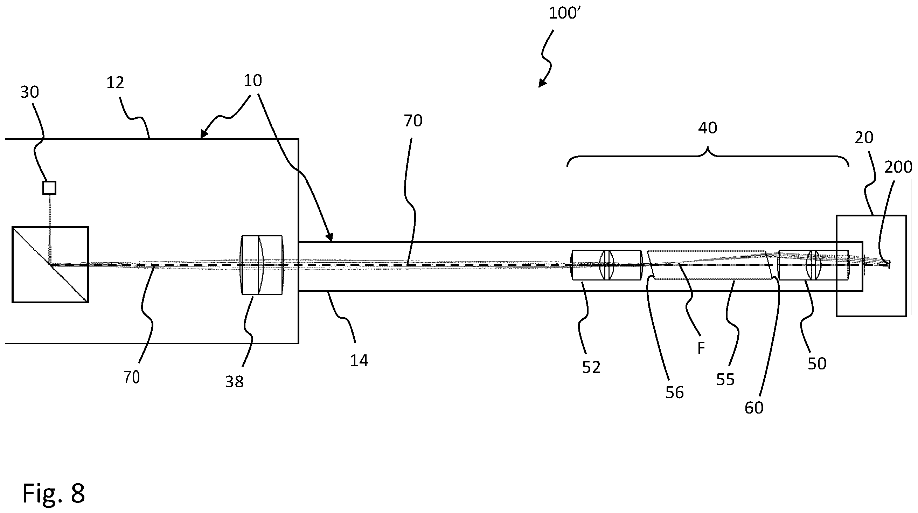

It is noted that other optical components may be used to create the offset and obtain the needed angle of incidence on the inspected endface, such as a tilted plate, a rhomboid prism, an optical prism, etc. For example, in another embodiment illustrated in Fig. 8, the two optical wedges 54, 58 are replaced by a single parallelepiped-like optical prism 55 defining the first and the second refracting surfaces 56, 60.

Based on these principles, it is possible to create an optical design that will provide proper illumination and imaging quality in a straight APC-native fiber inspection microscope device.

It should be noted that in other embodiments, in order to increase the tilt of the illumination path at the output of the relay optics, there may be used an optical element that is only needed for illumination and that has no impact on the imaging quality.

The embodiment of Fig. 3 was optically designed with the goal of optimizing the system as much as possible. It is however noted that other, less optimal but workable solutions may exist. For example, the imaging path of light returning to the image detector after reflection may be slightly different from the illumination path.

Furthermore, it is noted that, ideally, illumination light exits the inspection microscope device 100 at an angle of about 8 degrees but that this angle can be slightly varied without substantially impacting the illumination of the endface and the quality of the inspection images. For example, unless otherwise mentioned, when referring herein to an angle of about 8 degrees, it should be understood that the illumination light exits the inspection microscope device along an illumination path that is at an angle that is between 6 and 10 degrees, and preferably between 7 and 9 degrees, relative to the optical axis of the objective lens system of the inspection microscope device. In other words, in case of a slightly converging or diverging illumination light beam, the center of the light beam exits the inspection microscope device at an angle that is between 6 and 10 degrees, and preferably between 7 and 9 degrees, relative to the optical axis of the objective lens system.

In the embodiment of Fig. 3, the focusing lens 36 is embodied as a deformable lens. However, in other embodiment, focusing may be achieved by translating the objective lens 38 along the imaging path. However, moving the objective lens 38 relative to the illumination source 30 may slightly change the illumination such that the illumination may vary with the focus.

If needed, it may further be possible to add a mirror in the optical path (anywhere between the connector endface and the optical detector) in order to obtain an angled inspection microscope device 100.

The configuration of Fig. 3 may be adapted to any kind of APC connectors including simplex, duplex and multifiber connectors.

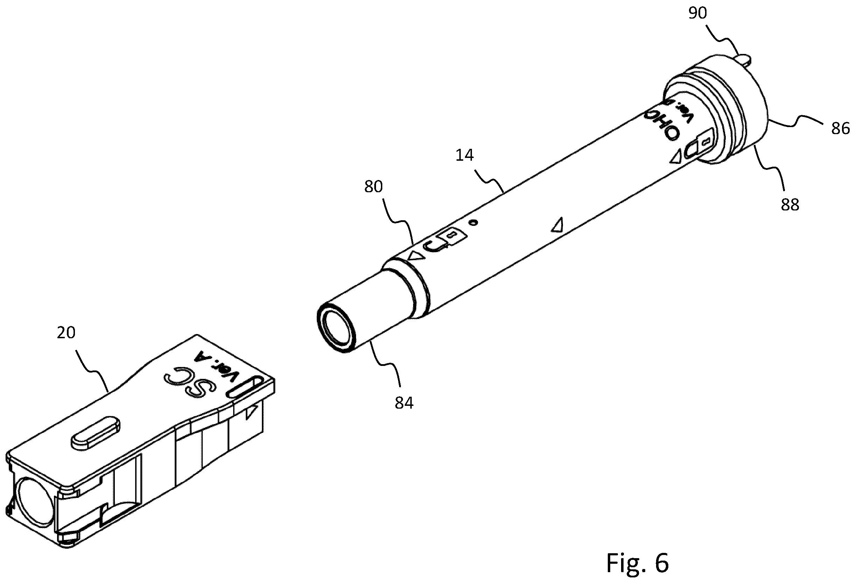

Referring to Figs. 5A, 5B, 6 and 7, the optical head 14 is described in more detail. As shown in Fig. 6, the optical head 14 comprises a substantially elongated hollow member 80 defining a channel between a proximal end 84 and a distal end 86 (proximal and remote relative to the connector endface under inspection), in which illumination light may propagate to and back from the inspected connector endface. The hollow member 80 encloses the relay optics 40 comprising the relay lenses 50, 52 and the wedges 54, 58. At the distal end 86, it further comprises a connection mechanism 88, such as a screw-threaded mechanism or a twist and lock mechanism for example, for releasable connection to the main housing 12. The connection mechanism 88 on the optical head 17 and that of the main housing 12 have complementary engaging features 90 respectively located on the optical head 14 and the main housing 12 configured to fix a clocking orientation of the optical head 14 relative to the main housing 12.

Similarly, the adapter tip 20 may be made releasably connectable to the optical head 14 using a twist and lock mechanism connection mechanism or the like (not shown). The optical head 14 is designed to insert inside the adapter tip 20. The adapter tips can have various lengths depending on the type of connector or bulkhead. Hence, the optical head 14 is made long and narrow in order to support these various configurations. At least part of the elongated member 80 of the optical head 17 may interlock into the hollow member of the adapter tip 20 so that the relay optics 40 of the optical head 14 are positioned within the adapter tip 20 when they are assembled. This configuration allows the relay lens 50 to be located close to the inspected connector endface, i.e., near the inspection end of the optical-fiber inspection microscope system 100.

The optical components inside the optical head 14 are designed and installed to support a specific 8-degree angle of the connector endface under inspection. To prevent unsupported clocking orientations, the adapter tip 20 and the optical head 14 comprise complementary engaging features (such as a key and a slot) so that there is only one way to install the adapter tip 20 on the optical head 14.

Similarly, the main housing 12 and the optical head 14 comprise complementary engaging features (such as a key 90 and a slot) to maintain a specific clocking orientation of the optical head 14 relative to the main housing 12 of the inspection microscope device 100.

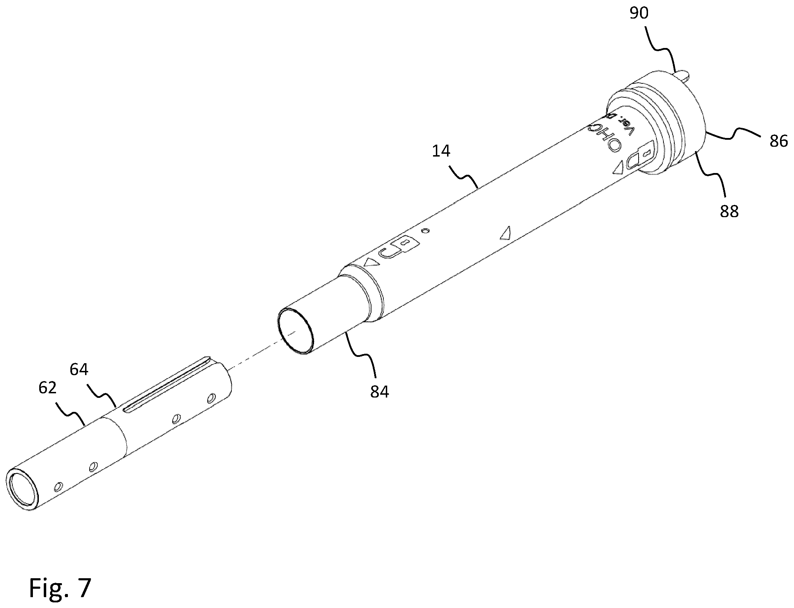

As illustrated in Fig. 7, in order to ease the mechanical assembly of the optical head 14, an optical sub-cell assembly 62 may be used to precisely hold, align, and fix optical components of the optical head 14 (relay lenses 50, 52 and wedges 54, 58). The optical sub-cell assembly 62 comprises a substantially elongated hollow member 64 which is mainly cylindrical, and which outer dimensions are designed to fit inside the hollow member 80 of the optical head 14. The relay optics 40 are mounted in the hollow member 64. Optionally, the hollow members 64 and 80 may comprise complementary engaging features (such as a key and a slot) in order to automatically align one relative to the other so that there is only one possible clocking orientation when they are assembled. The hollow member 64 may further comprise mechanical features on its inner side, such as stoppers or the like, which may serve to automatically align the wedges 54, 58 inside. The optical sub-cell assembly 62 allows easier assembly of the small optical components of the relay optics 40, which would otherwise be deeply recessed inside the slightly bulkier optical head. More specifically, when long and narrow mechanical components such as the optical head 14 are manufactured, it can become hard to manufacture deep holes for optical components. Cost increases, tolerances are harder to meet, to the point that optical performances are highly degraded. The optical sub-cell assembly 62 is shorter, cost effective and easier to manufacture at higher precision.

The optical sub-cell assembly 62 may further offer the possibility to be assembled and be independently tested to validate if the quality criteria are met. It can then be fixed inside more expensive components of different types like the optical head 14 or a different dedicated optical head if required for inspection of specific connector formats. The assembly of the optical components inside the optical sub-cell assembly 62 represents a critical step of the process. Should any reject happen at this stage, only the optical sub-cell assembly 62 may be rejected, improving the overall product cost.

It is noted that although the optical-fiber connector endface inspection microscope device 100 is natively designed for inspecting APC optical-fiber connectors, it can still be used to inspect UPC optical-fiber connectors, e.g., by using more expensive adapter tips designed to position a UPC optical-fiber connector at an 8-degree angle for proper inspection using the APC-native inspection microscope device 100. Because UPC optical-fiber connectors are less frequent, expensive UPC adapter tips have less impact on the overall cost of the solution than expensive APC adapter tips would have.

The embodiments described above are intended to be exemplary only and one skilled in the art will recognize that numerous modifications can be made to these embodiments without departing from the scope of the invention.

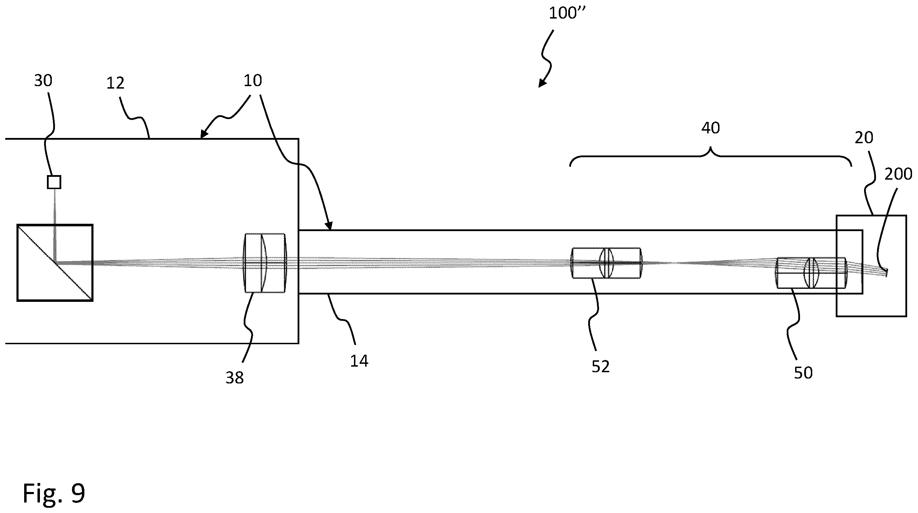

For example, Fig. 9 illustrates an embodiment of an inspection microscope device 100" in which the relay optics 40 comprises two relay lenses 50, 52 but no optical wedge. In this embodiment, the illumination path is deviated by introducing a transversal offset between the optical axis of the relay lens 50 and that of the objective lens 38. In the illustrated embodiment, the optical axis of the relay lens 52 is aligned with that of the objective lens 38 but other embodiments may further introduce an offset between the relay lens 52 and the objective lens 38. As in the embodiments of Fig. 3 and 8, the relay optics 40 is used to deviate the illumination path so as to illuminate the connector endface in a direction that is substantially normal to the angled-polished connector endface to be inspected. This configuration advantageously requires less optical components. However, optical axes of the objective lens 38 and the relay lens 50 need to be offset relative to one another and relative to the optical fiber center of the inspected connector endface, which may make manufacturing more complex.

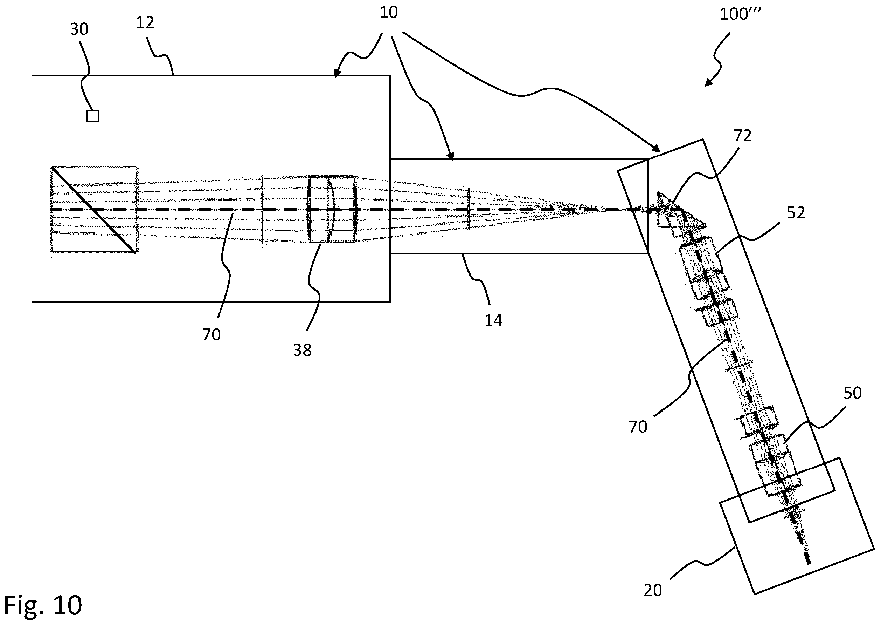

Fig. 10 illustrates yet another embodiment of an inspection microscope device 100‴ in which the optical head 14 is kinked in order to provide an angled inspection microscope device 100 adapted to reach optical connectors which may otherwise be very difficult to reach. In order to deflect the optical axis 70 of the objective lens 38, a reflective device 72 (such as a mirror or a prism) is introduced along the optical path, here between the objective lens 38 and the relay optics 40. Illumination light therefore exits the housing structure 10 of the inspection microscope device 100‴ along an illumination path that is at an angle of about 8 degrees relative to the deflected optical axis 70.

### Example of inspection microscope device architecture

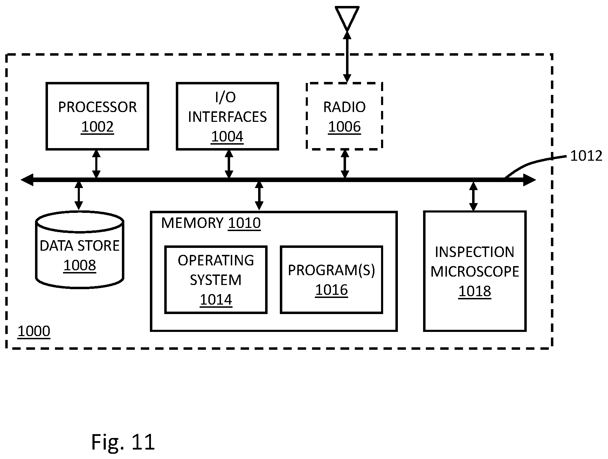

Fig. 11 is a block diagram of an inspection microscope device 1000 which may embody the inspection microscope device 10 of Fig. 2. The inspection microscope device 1000 may comprise a digital device that, in terms of hardware architecture, generally includes a processor 1002, input/output (I/O) interfaces 1004, an optional radio 1006, a data store 1008, a memory 1010, as well as an optical test device including an inspection microscope 1018. It should be appreciated by those of ordinary skill in the art that Fig. 11 depicts the inspection microscope device 1000 in a simplified manner, and a practical embodiment may include additional components and suitably configured processing logic to support known or conventional operating features that are not described in detail herein. A local interface 1012 interconnects the major components. The local interface 1012 can be, for example, but not limited to, one or more buses or other wired or wireless connections, as is known in the art. The local interface 1012 can have additional elements, which are omitted for simplicity, such as controllers, buffers (caches), drivers, repeaters, and receivers, among many others, to enable communications. Further, the local interface 1012 may include address, control, and/or data connections to enable appropriate communications among the aforementioned components.

The processor 1002 is a hardware device for executing software instructions. The processor 1002 may comprise one or more processors, including central processing units (CPU), auxiliary processor(s) or generally any device for executing software instructions. When the inspection microscope device 1000 is in operation, the processor 1002 is configured to execute software stored within the memory 1010, to communicate data to and from the memory 1010, and to generally control operations of the inspection microscope device 1000 pursuant to the software instructions. The processor 1002 may implement a controller used to control the operation of the image detectors and the illumination sources of the inspection microscope 1018. The controller may further be used to control the focusing lens 35 for adjusting a focus of the objective lens system.

In an embodiment, the processor 1002 may include an optimized mobile processor such as optimized for power consumption and mobile applications. The I/O interfaces 1004 can be used to receive user input from and/or for providing system output. User input can be provided via, for example, a keypad, a touch screen, a scroll ball, a scroll bar, buttons, barcode scanner, and the like. System output can be provided via a display device such as a liquid crystal display (LCD), touch screen, and the like, via one or more LEDs or a set of LEDs, or via one or more buzzer or beepers, etc. The I/O interfaces 1004 can be used to display a graphical user interface (GUI) that enables a user to interact with the inspection microscope device 1000 and/or output at least one of the values derived by the inspection microscope analyzing software.

The radio 1006, if included, may enable wireless communication to an external access device or network. Any number of suitable wireless data communication protocols, techniques, or methodologies can be supported by the radio 1006, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; Long Term Evolution (LTE); cellular/wireless/cordless telecommunication protocols (e.g. 3G/4G, etc.); NarrowBand Internet of Things (NB-loT); Long Term Evolution Machine Type Communication (LTE-M); magnetic induction; satellite data communication protocols; and any other protocols for wireless communication. The data store 1008 may be used to store data, such as inspection microscope images. The data store 1008 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1008 may incorporate electronic, magnetic, optical, and/or other types of storage media.

The memory 1010 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1010 may incorporate electronic, magnetic, optical, and/or other types of storage media. Note that the memory 1010 may have a distributed architecture, where various components are situated remotely from one another, but can be accessed by the processor 1002. The software in memory 1010 can include one or more computer programs, each of which includes an ordered listing of executable instructions for implementing logical functions. In the example of Fig. 11, the software in the memory 1010 includes a suitable operating system (O/S) 1014 and computer programs 1016. The operating system 1014 essentially controls the execution of other computer programs and provides scheduling, input-output control, file and data management, memory management, and communication control and related services. The program(s) 1016 may include various applications, add-ons, etc. configured to provide end-user functionality with the inspection microscope device 1000. For example, example programs 1016 may include a web browser to connect with a server for transferring inspection result data files, a dedicated inspection microscope application configured to control inspection microscope measurements by the inspection microscope 1018, set image acquisition parameters, analyze connector endface images obtained by the inspection microscope 1018 and display a GUI related to the inspection microscope device 1000.

It is noted that, in some embodiments, the I/O interfaces 1004 may be provided via a physically distinct mobile device (not shown), such as a handheld computer, a smartphone, a tablet computer, a laptop computer, a wearable computer or the like, e.g., communicatively coupled to the inspection microscope device 1000 via the radio 1006. In such cases, at least some of the programs 1016 may be located in a memory of such a mobile device, for execution by a processor of the physically distinct device. The mobile may then also include a radio and be used to transfer measurement data files toward a remote test application residing, e.g., on a server.

Although the present disclosure has been illustrated and described herein with reference to specific embodiments and examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following claims.

## Claims

1. An optical-fiber connector endface inspection microscope device for inspecting an endface of an angled-polished optical-fiber connector, the optical-fiber connector endface inspection microscope device comprising:
an illumination source generating illumination light for illuminating the endface to be inspected, said illumination light propagating along an illumination path;
an image detector for capturing at least one image of the endface to be inspected from light returned from the endface;
an objective lens system comprising at least one objective lens to produce an image of the endface to be inspected on the image detector, the objective lens system defining an optical axis;
relay optics receiving said illumination light for illuminating the connector endface, and configured to deviate said illumination path so as to illuminate the connector endface in a direction that is substantially normal to the angled-polished connector endface to be inspected; and
a housing structure enclosing said illumination source, said image detector, said objective lens system and said relay optics, said housing structure being releasably connectable to an adapter tip for mechanically interfacing with the angled-polished optical-fiber connector so as to position an optical-fiber axis of the angled-polished optical-fiber connector substantially parallel to the optical axis of said objective lens system; and
wherein illumination light exits said housing structure along an illumination path that is at an angle of about 8 degrees relative to the optical axis of said objective lens system, so as to illuminate the connector endface in a direction that is substantially normal to the angled-polished endface to be inspected.

2. The optical-fiber connector endface inspection microscope device as claimed in claim 1, wherein said housing structure comprises a main housing and an optical head connectable to the main housing; wherein the optical head is releasably connectable to an adapter tip for mechanically interfacing with the optical-fiber connector to be inspected and defining a position of the connector endface on an object plane for inspection; and wherein said relay optics are enclosed in the optical head.

3. The optical-fiber connector endface inspection microscope device as claimed in claim 2, wherein the adapter tip is interchangeable with other adapter tips to allow inspection of various types of optical-fiber connectors, whereas the optical head remains the same for said multiple types of optical-fiber connectors to be inspected.

4. The optical-fiber connector endface inspection microscope device as claimed in claim 2 or 3, wherein said optical head comprises a substantially elongated hollow member and a sub-cell assembly in which said relay optics are assembled, said sub-cell assembly being mounted within the elongated hollow member.

5. The optical-fiber connector endface inspection microscope device as claimed in any one of claims 1 to 4, wherein said relay optics comprises:
a first relay lens and a second relay lens along said illumination path and receiving said illumination light from said objective lens system,
said first relay lens and said second relay lens deviating said illumination path to an angle of about 8 degrees relative to the optical axis of said objective lens when illumination light exits said relay optics.

6. The optical-fiber connector endface inspection microscope device as claimed in any one of claims 1 to 4, wherein said relay optics comprises:
a first relay lens and a second relay lens along said illumination path and receiving said illumination light from said objective lens system; and
a first refracting plane surface and a second refracting plane surface in-between said first relay lens and second relay lens, wherein said first refracting plane surface and said second refracting plane surface are both tilted relative to optical axes of said first relay lens and second relay lens so as to deviate said illumination path at an angle that is substantially egal to 8 degrees relative to the optical axis of said objective lens system when said illumination light exits said relay optics.

7. The optical-fiber connector endface inspection microscope device as claimed in claim 6, wherein optical axes of said objective lens system, said first relay lens and second relay lens are substantially parallel to an optical fiber axis of said angled-polished optical-fiber connector during inspection.

8. The optical-fiber connector endface inspection microscope device as claimed in claim 7, wherein optical axes of said objective lens system and of said first lens and second relay lens are all substantially aligned to a center of the connector endface during inspection.

9. The optical-fiber connector endface inspection microscope device as claimed in any one of claims 6 to 8, wherein said relay optics comprise a first optical wedge and a second optical wedge along said illumination path, wherein a surface of said first optical wedge defines said first refracting plane surface and a surface of said second optical wedge defines said second refracting plane surface.

10. The optical-fiber connector endface inspection microscope device as claimed in any one of claims 1 to 9, wherein said angle of said illumination path at the exit of said housing structure relative to the optical axis of said objective lens is between 6 and 10 degrees, and preferably between 7 and 9 degrees.

11. An optical-fiber connector endface inspection microscope system for inspecting an endface of an angled-polished optical-fiber connector, the optical-fiber connector endface inspection microscope system comprising:
an optical-fiber connector endface inspection microscope device comprising:
an illumination source generating illumination light for illuminating the endface to be inspected, said illumination light propagating along an illumination path;
an image detector for capturing at least one image of the endface to be inspected from light returned from the endface;
an objective lens system comprising at least one objective lens to produce an image of the endface to be inspected on the image detector;
relay optics receiving said illumination light for illuminating the connector endface, and configured to deviate said illumination path so as to illuminate the connector endface in a direction that is substantially normal to the angled-polished connector endface to be inspected; and
a housing structure enclosing said illumination source, said image detector, said objective lens system and said relay optics, said housing structure being releasably connectable to an adapter tip for mechanically interfacing with the angled-polished optical-fiber connector;
wherein illumination light exits said housing structure along an illumination path that is at an angle of about 8 degrees relative to an optical axis of said objective lens system; and
wherein said housing structure comprises a main housing and an optical head connectable to the main housing, said relay optics being enclosed in the optical head; and
an adapter tip releasably connectable to the optical head, for mechanically interfacing with the optical-fiber connector to be inspected and configured to position the connector endface on an object plane for inspection such that an optical fiber axis of said optical-fiber connector is substantially parallel to optical axis of said objective lens system and so as to illuminate the connector endface in a direction that is substantially normal to the angled-polished endface to be inspected.

12. The optical-fiber connector endface inspection microscope system as claimed in claim 11, wherein the adapter tip is interchangeable with other adapter tips to allow inspection of various types of optical-fiber connectors, whereas the optical head remains the same for said multiple types of optical-fiber connectors to be inspected.

13. The optical-fiber connector endface inspection microscope system as claimed in claim 11 or 12, wherein said relay optics comprises:
a first relay lens and a second relay lens along said illumination path and receiving said illumination light from said objective lens system; and
a first refracting plane surface and a second refracting plane surface in-between said first relay lens and second relay lens, wherein said first refracting plane surface and said second refracting plane surface are both tilted relative to optical axes of said first relay lens and second relay lens so as to deviate said illumination path at an angle that is substantially egal to 8 degrees relative to the optical axis of said objective lens system when said illumination light exits said relay optics.

14. The optical-fiber connector endface inspection microscope system as claimed in claim 13, wherein optical axes of said objective lens system, said first relay lens and second relay lens are substantially parallel to an optical fiber axis of said angled-polished optical-fiber connector during inspection.

15. The optical-fiber connector endface inspection microscope system as claimed in claim 14, wherein optical axes of said objective lens system and of said first lens and second relay lens are all substantially aligned to a center of the connector endface during inspection.
